# EUROPEAN PATENT APPLICATION

(11) **EP 1 503 050 A2**
(43) Date of publication of application: **02.02.2005**
(21) Application number: 04017743.8
(22) Date of filing: 27.07.2004
(51) Int. Cl.: F01M 1/10, F01M 11/00, F01M 5/00

(54) **Combined oil filter and oil cooler unit**

(30) Priority: 31.07.2003 JP 2003283856
(71) Applicant: Kawasaki Jukogyo Kabushiki Kaisha, Kobe-shi, Hyogo 650-8670 (JP)
(72) Inventor: Ueshima, Atsushi, Akashi-shi Hyogo 673-0002 (JP); Hirano, Kuniomi, Himeji-shi Hyogo 670-0836 (JP)
(74) Representative: Neugebauer, Jürgen, Dipl.-Phys.

(57) **Abstract**

To provide a combined oil filter and oil cooler unit in which the oil filter and the oil cooler are neatly integrated together to thereby suppress any undesirable interference with peripheral component parts such as, for example, exhaust tubes, the combined oil filter and oil cooler unit (U) includes a mounting bracket (5) adapted to be mounted on a vehicle engine (1) or a vehicle body structure (F) carrying the vehicle engine (1) and having a filter support (5a) and a cooler support (5b) defined therein, an oil filter (3) supported by the filter support (5a) of the mounting bracket (5), and an oil cooler (4) supported by the cooler support (5b) of the mounting bracket (5).

## Description

### BACKGROUND OF THE INVENTION

### (Field of the Invention)

The present invention generally relates to a combined oil filter and oil cooler unit for use in an automotive vehicle, particularly a motorcycle, of a type having a four-cycle internal combustion engine and, more particularly, to the combined oil filter and oil cooler unit in which an oil filter for filtering an engine oil and an oil cooler for cooling the engine oil are integrated together.

### (Description of the Prior Art)

In a four-cycle internal combustion engine used in an automotive vehicle, particularly a motorcycle, it has hitherto been experienced that when the oil filter and the oil cooler are arranged on a crankcase in spaced relation with each other, oil piping within the crankcase tends to become complicated in structure, resulting in reduction in productivity and increase of the manufacturing cost. In view of this, the Japanese Laid-open Patent Publication No. 64-8313 discloses a two-staged arrangement of the oil filter and the oil cooler, in which in order to alleviate the above discussed problem, the oil cooler is secured to a front surface of the crankcase so as to protrude outwardly with the oil filter supported directly by a free end of the oil cooler. With the two-staged arrangement disclosed in the above mentioned publication, an oil passage extending between the oil filter and the oil cooler can have a reduced length.

However, the two-staged arrangement referred to above has been found having a problem in that since the oil filter is supported by the oil cooler, a considerable load is imposed on the oil cooler. Because of this, the housing for the oil cooler is necessarily required to have an increased strength, resulting in increase of the weight. Also, since the oil filter protrudes a considerable distance forwardly of the oil cooler, the amount of protrusion of the arrangement as a whole increases to such an extent that the oil filter may have a possibility to interfere with exhaust tubes of the engine. Accordingly, the exhaust tubes must be bent a considerable angle in order to avoid the interference with the two-staged arrangement, with the design choice consequently limited. In addition, gaps present between the oil filter and the exhaust tubes come to be so narrow that the workability, during maintenance and/or inspection, including replacement of a filter, may be undesirably reduced.

In view of the foregoing, the present invention has for its object to provide a combined oil filter and oil cooler unit in which the oil filter and the oil cooler are neatly integrated together to thereby suppress any undesirable interference with peripheral component parts such as exhaust tubes and also to minimize increase of the weight of the oil cooler.

### SUMMARY OF THE INVENTION

In order to accomplish the foregoing object of the present invention, the combined oil filter and oil cooler unit herein disclosed includes a mounting bracket adapted to be mounted on a vehicle engine or a vehicle body structure carrying the vehicle engine and having a filter support and a cooler support defined therein. The oil filter is supported by the filter support of the mounting bracket, and the oil cooler is supported by the cooler support of the mounting bracket.

According to the present invention, the single mounting bracket has the filter support and the cooler support, with the oil filter and the oil cooler supported respectively by the filter support and the cooler support, to thereby provide a compact unit. Also, by properly setting a mounting face of the mounting bracket through which the combined oil filter and oil cooler unit can be secured to the engine or the vehicle body structure, for example, a motorcycle frame structure, the amount of protrusion of the combined unit away from the engine or the vehicle body structure can be suppressed to a minimal value.

In other words, the amount of protrusion of the combined oil filter and oil cooler unit of the present invention does not become so large as that exhibited by the previously discussed two-staged arrangement, in which the oil filter is mounted on the oil cooler, and, therefore, an undesirable interference of the oil filter or the oil cooler with peripheral component parts can advantageously be avoided. Also, since the oil filter is supported by the mounting bracket and is not fitted directly to the oil cooler, the oil cooler can have a relatively low strength to thereby accomplish a weight reduction.

Preferably, an oil communicating passage for communicating between the oil filter and the oil cooler is defined in the mounting bracket.

According to this feature, since the oil filter and the oil cooler can be communicated with each other through the oil communicating passage, no extra oil piping for communicating between the oil filter and the oil cooler is required, resulting in reduction in number of component parts used and, also, in manufacturing cost.

Also, the oil filter and the oil cooler are preferably arranged on respective opposite sides of the mounting bracket.

With this arrangement, since the oil filter and the oil cooler both secured to the mounting bracket represent, as a whole, a generally elongated shape with the mounting bracket neatly positioned intermediate between the oil filter and the oil cooler, space limitation for installation is reduced as far as the installation position on the engine or vehicle body structure is concerned and, therefore, a relatively large freedom of design choice can be appreciated.

According to this feature, since the oil filter and the oil cooler are arranged in side-by-side relation with the mounting face of the mounting bracket, the amount of protrusion of any of the oil filter and the oil cooler away from the engine or the vehicle body structure to which the mounting bracket is secured can advantageously be minimized, thereby suppressing any undesirable interference with peripheral component parts.

In a preferred embodiment of the present invention, the filter support and the cooler support have a filter support face and a cooler support face, which are parallel to each other, the oil filter and the oil cooler supported respectively by the filter support face and the cooler support face. According to this features, by virtue of the filter support face and the cooler support face that are parallel to each other, the oil filter and the oil cooler can be, easily and in a well-balanced fashion, secured to the mounting bracket. The oil filter and the oil cooler may have respective longitudinal axes substantially aligned with each other, and the oil communicating passage is arranged substantially coaxially on the respective longitudinal axes of the oil filter and the oil cooler.

In another preferred embodiment, the oil filter and the oil cooler have respective longitudinal axes lying substantially parallel to each other and the mounting bracket has a mounting face through which the mounting bracket is secured to the engine or the vehicle body structure. In this case, the mounting face may be located at a position offset from the respective longitudinal axes of the oil filter and the oil cooler.

The respective longitudinal axes of the oil filter and the oil cooler may extend either horizontally or vertically. Where the respective longitudinal axes of the oil filter and the oil cooler extend vertically, the oil cooler is preferably positioned above the oil filter so that when the oil filter is to be disassembled, for example, a filter cap is removed, the engine oil within the oil filter will hardly leak to the outside.

In a further preferred embodiment of the present invention, the oil cooler has a longitudinal axis extending horizontally while the oil filter has a longitudinal axis extending inclined downwardly relative to the oil cooler. Even this feature is particularly advantageous in that when the oil filter is to be disassembled, for example, a filter cap is removed, the engine oil within the oil filter will hardly leak to the outside.

Also, depending on the space available in the surroundings, the respective longitudinal axes of the oil filter and the oil cooler may lie perpendicular to each other.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a front elevational view of a four-cycle internal combustion engine provided with a combined oil filter and oil cooler unit in accordance with a first preferred embodiment of the present invention;
Fig. 2 is a side view of the engine with a portion illustrated in a cross-sectional view;
Fig. 3 is a longitudinal sectional view, on an enlarged scale, showing the combined oil filter and oil cooler unit;
Fig. 4 is a perspective view of the combined oil filter and oil cooler unit;
Fig. 5 is a schematic front elevational view of a combined oil filter and oil cooler unit according to a second preferred embodiment of the present invention;
Fig. 6 is a schematic front elevational view of a combined oil filter and oil cooler unit according to a third preferred embodiment of the present invention;
Fig. 7 is a schematic front elevational view of a combined oil filter and oil cooler unit according to a fourth preferred embodiment of the present invention; and
Fig. 8 is a schematic front elevational view of a combined oil filter and oil cooler unit according to a fifth preferred embodiment of the present invention/

### DETAILED DESCRIPTION OF THE EMBODIMENTS

Reference will now be made to the accompanying drawings for the detailed description of some preferred embodiments of the present invention.

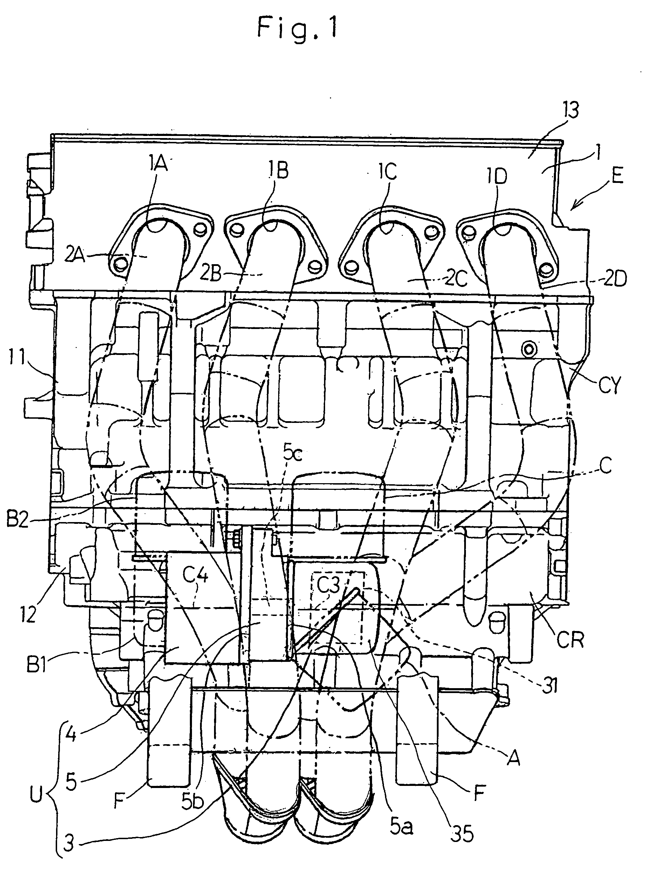

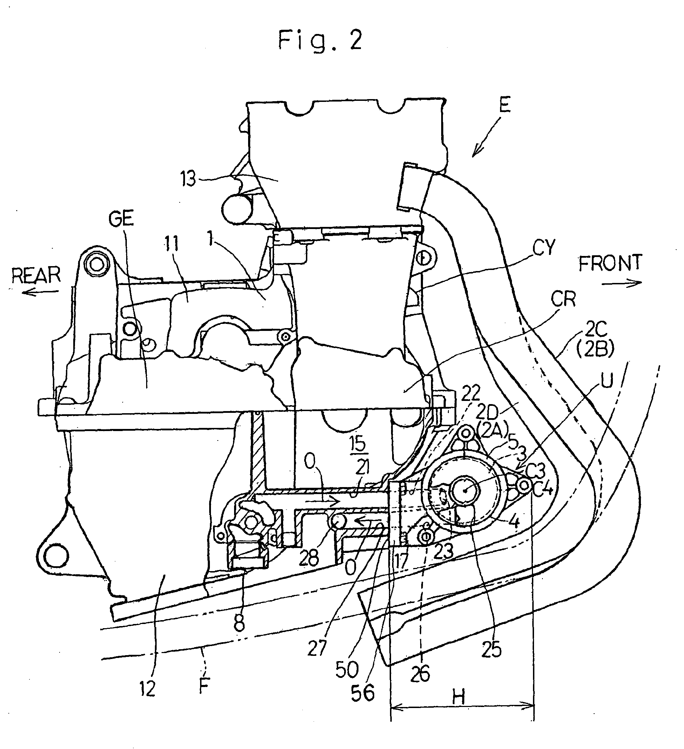

Referring to Fig. 1 showing a front elevational view of an four-cycle internal combustion engine E for motorcycles, the engine E is fixedly mounted on a motorcycle body structure or frame structure F and includes an engine body 1 having a crankcase CR, a cylinder block CY and a gear casing GE (Fig. 2), all formed by an upper casing 11 and a lower casing 12. A cylinder head 13 is mounted on and connected with the upper casing 11 and has four exhaust ports 1A, 1B, 1C and 1D fluid connected with exhaust tubes 2A, 2B, 2C and 2D, respectively. The two exhaust tubes 2A and 2B positioned on a right side of the motorcycle frame structure F are arranged one above the other with the outer exhaust tube 2A having been bent inwardly to assume a position above the inner exhaust tube 2B and are fluid connected with a muffler (not shown).

A similar arrangement is employed for the remaining two exhaust tubes 2C and 2D, with the outer exhaust tube 2D positioned above the inner exhaust tube 2C.

As shown in Fig. 2, the lower casing 12 of the engine E is provided with an oil pump 8 for supplying an engine oil under pressure for lubricating various movable component parts of the engine E. As shown in Fig. 1, a combination oil filter and oil cooler unit U made up of an oil filter 3 having an annular filter element 31 retained therein, an oil cooler 4 and a mounting bracket 5 positioned between the oil filter 3 and the oil cooler 4 is provided at a position of the lower casing 12 forwardly of a crank chamber 15 (Fig. 2). Specifically, the mounting bracket 5 has a filter support 5a and a cooler support 5b both formed therein, and the oil filter 3 and the oil cooler 4 are supported by the mounting bracket 5 through the filter support 5a and the cooler support 5b, respectively. The filter support 5a and the cooler support 5b are in the form of flat mounting surfaces, respectively, that are parallel to each other.

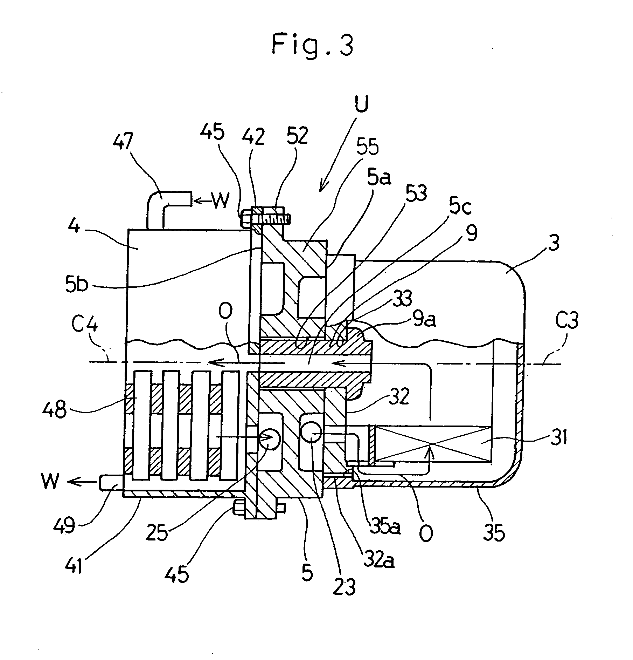

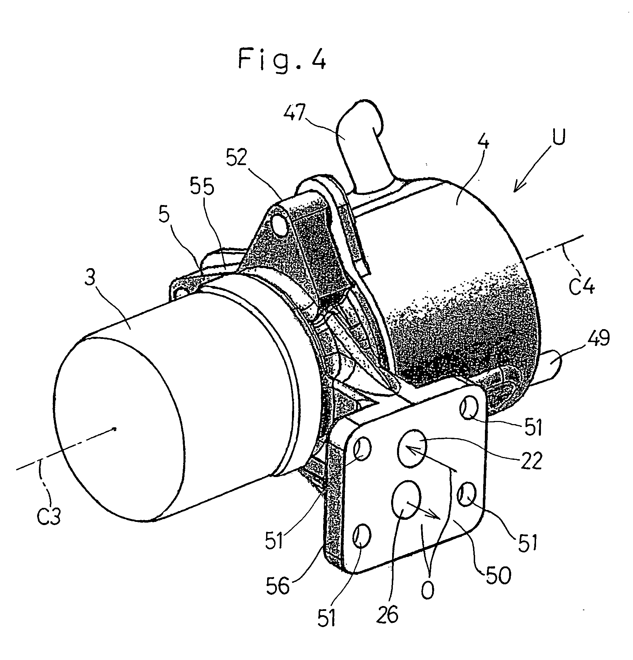

As best shown in Fig. 3, the mounting bracket 5 is formed with an oil communicating passage 5c for communicating between the oil filter 3 and the oil cooler 4. Also, as shown in Fig. 4, the mounting bracket 5 has a support portion 55 to support the oil filter 3 and the oil cooler 4 and further, has a mounting base 56 to be mounted on the engine body 1 (Fig. 2). The support portion 55 is provided with the filter support 5a and the cooler support 5b that form respective end faces of the support portion 55. Thus, the oil filter 3 and the oil cooler 4 are arranged on respective opposite sides of the support portion 55. The mounting base 56 is formed with a plurality of, for example, four, bolt insertion holes 51. As shown in Fig. 2, by means of mounting bolts 17 inserted through the respective bolt insertion holes 51 (Fig. 4), the mounting bracket 5 can be firmly secured to the engine body 1 with a mounting face 50 of the mounting base 56 held in tight contact with a front surface of the lower casing 12 of the engine body 1, i.e., a front lower portion of the crankcase CR.

In the combined oil filter and oil cooler unit U of the structure described above, an engine oil O accumulating within an oil pan or reservoir mounted on a bottom of the lower casing 12 as shown in Fig. 2 can be supplied by the oil pump 8 so as to flow through a first oil supply passage 21 within the lower casing 12 and then through a second oil supply passage 22 within the mounting bracket 5 before it reaches the oil filter 3 through an exit port 23 of the second oil supply passage 22. The engine oil O flowing into the oil filter 3 as best shown in Fig. 3 passes radially inwardly through the annular filter element 31 within the oil filter 3 from an outer periphery towards an inner periphery thereof, with foreign matters such as metallic particles and/or grits consequently trapped and, hence, removed by the annular filter element 31.

The purified engine oil O subsequently flows through the oil communicating passage 5c in the mounting bracket 5 into the oil cooler 4. After it has been cooled by the oil cooler 4, the engine oil O flows through an introducing port 25 formed in the mounting bracket 5 into an oil return passage 26 shown in Fig. 2, and then through an oil return passage 27 in the lower casing 12 towards a main gallery 28. The engine oil O entering the main gallery 28 is utilized to lubricate various movable component parts of the engine such as, for example, camshafts, a crankshaft, big ends of connecting rods, all not shown.

Mounting of the oil filter 3 and the oil cooler 4 on the mounting bracket 5 will now be described. Referring now to Fig. 3, the mounting bracket 5 has an internally threaded communicating hole 53 defined at a substantially center portion thereof and also has a plurality of, for example, three in the illustrated embodiment, perforated bosses 52 formed integrally therewith so as to protrude outwardly from an outer periphery of the mounting bracket 5. The oil filter 3 is positioned on a right side of the mounting bracket 5 as viewed in Fig. 3, or a left side of the motorcycle frame structure F (Fig. 1) with respect to the direction of forward travel and, has a base 32, a substantially center portion of which has holes 33 defined therein in alignment with the internally threaded communicating hole 53. The oil filter 3 can be secured to the mounting bracket 5 with the base 32 held in tight contact with the mounting bracket 5, by means of an externally threaded quill bolt 9 passing through the hole 33 in the base 32 of the oil filter 3 and then firmly threaded into the threaded communicating hole 53.

It is to be noted that the communicating passage 5c referred to hereinbefore and communicating between the oil filter 3 and the oil cooler 4 is defined by the internal bore of the quill bolt 9 and that fastening of the quill bolt 9 can be accomplished by turning a bolt head 9a of the quill bolt 9.

The filter element 31 is carried by the base 32 of the oil filter and positioned on one side of the mounting bracket 5 remote from the oil cooler 4 and is enclosed by a generally cylindrical cap 35. The cap 35 has an internally threaded portion 35a defined in an inner peripheral surface thereof at a location adjacent the opening of the cap 35 and is firmly threadingly capped onto an externally threaded portion 32a, formed in an outer peripheral portion of the base 32, to thereby connect the cap 35 with the base 32. As a matter of course, the cap 35 can be removed from the base 32 by undoing the cap 35 relative to the base 32.

On the other hand, the oil cooler 4 positioned on a left side of the mounting bracket 5 as viewed therein, or a right side of the motorcycle frame structure F (Fig. 1) with respect to the direction of forward travel, includes a generally cylindrical housing 41 having its outer peripheral portion formed with radially outwardly protruding lugs 42, equal in number to that of the perforated bosses 52 of the mounting bracket 5. By passing mounting bolts 45 through perforations in the lugs 42 of the housing 41 and then threading them into internally threaded holes in the bosses 52, respectively, the oil cooler 4 can be secured to the mounting bracket 5. The oil cooler 4 is of a water cooled type such that a cooling water W enter into the oil cooler 4 through an intake port 47 in an upper region thereof and can emerge outwardly through an outlet port 49 after having flowed past cooling fins 48 to cool the oil O. The cooling water W referred to above is supplied to the oil cooler 4 by means of a water pump (not shown) that is used to cool the internal combustion engine E (Fig. 1) in a manner known to those skilled in the art.

As best shown in Figs. 4, both of the oil filter 3 and the oil cooler 4 are of a generally cylindrical configuration having respective longitudinal axes C3 and C4. The oil filter 3 and the oil cooler 4 supported by the mounting bracket 5 in the manner hereinabove described above are positioned relative to each other with their longitudinal axes C3 and C4 aligned horizontally with each other. The mounting base 56 having the mounting face 50 as hereinbefore described is positioned at a location offset laterally from the mutually aligned longitudinal axes C3 and C4 with the mounting face 50 held parallel to the longitudinal axes C3 and C4. Accordingly, it will readily be understood that the oil filter 3 and the oil cooler 4 do not protrude in a direction perpendicular to the plane of the mounting face 50 with the two-staged arrangement employed in the prior art, but they assume a position held in side-by-side relation with the mounting face 50 in a direction perpendicular to the mounting face 50 and, therefore, the amount of protrusion of the oil filter 3 and the oil cooler 4, shown by H in Fig. 2, can advantageously be minimized.

Also, the oil communicating passage 5c defined in the quill bolt 9 as discussed above with reference to Fig. 3 is positioned in alignment with the longitudinal axes C3 and C4. It is, however, to be noted that the longitudinal axes C3 and C4 may be offset relative to each other, but either parallel or at an angle to each other. Also, the mounting face 50 of the mounting base 56 integral with the mounting bracket 5 shown in Fig. 4 may not be always parallel to the longitudinal axes C3 and C4, but may be somewhat inclined relative to those longitudinal axes C3 and C4.

The operation of the combined oil filter and oil cooler unit U will now be described with particular reference to Fig. 3. As hereinbefore described, the oil filter 3 is secured to the filter support 5a of the mounting bracket 5, not to the oil cooler 4. On the other hand, the oil cooler 4 is similarly secured to the cooler support 5b of the mounting bracket 5, not to the oil filter 3. In other words, the mounting of the oil filter 3 depends on the strength of the mounting bracket 5 and is supported regardless of the strength of the oil cooler 4. In view of this, the housing 41 of the oil cooler 4 can be made of a light-weight material having a relatively low strength such as, for example, aluminum and, therefore, an undesirable increase of the weight of the oil cooler 4 can advantageously be suppressed.

Also, when the mounting bracket 5 is secured to the engine body 1 shown in Fig. 2, each of the oil filter 3 and the oil cooler 4 protrudes outwardly from the engine body 1 by a relatively small amount H comparable to the diameter of a single component part of the unit U and, accordingly, an undesirable interference of any of the oil filter 3 and the oil cooler 4 with other component parts such as, for example, exhaust tubes 2A to 2D can advantageously be avoided. In addition, since the oil filter 3 shown in Fig. 1 is oriented laterally outwardly of the motorcycle frame structure F, the cap 35 can readily be removed in a direction laterally outwardly of the motorcycle frame structure F without being interfered with the exhaust tubes 2A to 2D and, hence, maintenance and inspection of the oil filter 3, including replacement of the oil filter element 31 (Fig. 3), can readily be accomplished without being interfered with the exhaust tubes 2A to 2D.

In addition, since the oil filter 3 and the oil cooler 4 are communicated with each other through the communicating passage 5c provided in the mounting bracket 5, no extra oil supply tubing, which would otherwise be required to allow the oil to flow between the oil filter 3 and the oil cooler 4, is required, resulting in minimization of the number of component parts used, reduction in weight and, also, reduction in assembling cost.

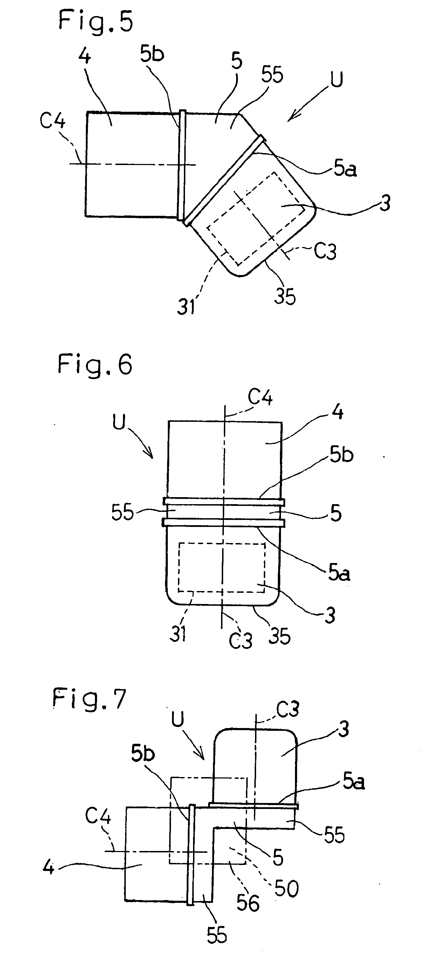

The oil filter 3 and the coil cooler 4 may not be necessarily arranged in the manner described hereinbefore in which they are positioned on respective left and right sides of and in symmetrical relation to each other with respect to the mounting bracket 5, but may be arranged in a manner as shown in any one of Figs. 5 to 8.

Specifically, in a second embodiment of the present invention shown in Fig. 5, the oil filter 3 and the oil cooler 4 are so arranged on respective sides of the mounting bracket 4 that when viewed from front of the motorcycle, the oil filter 3 can be inclined downwardly relative to the oil cooler 4. The longitudinal axis C4 of the oil cooler 4 extends horizontally while the longitudinal axis C3 of the oil filter 3 lies at an angle relative to the longitudinal axis C4 and extends downwardly from the mounting bracket 5. In such case, the oil filter 3 assumes such a position as shown by the phantom line A in Fig. 1. This embodiment is particularly advantageous in that when the cap 35 in Fig. 5 is removed during maintenance, inspection or replacement of the filter element 31 within the oil filter 3, the engine oil can be collected within the cap 35 and will hardly leak to the outside.

In a third embodiment shown in Fig. 6, the oil filter 3 and the oil cooler 4 are positioned on respective sides of the mounting bracket 5, but are oriented up and down with the oil cooler 4 positioned above the oil filter 3. In other words, the longitudinal axes C3 and C4 of the oil filter 3 and the oil cooler 4 lie vertically.

The third embodiment shown in and described with reference to Fig. 6 is particularly advantageous in that where no space for installation is available leftwards or rightwards of the engine body 1, the oil filter 3 and the oil cooler 4 can be secured to the engine body 1 neatly. Also, as is the case with the previously described second embodiment, an additional advantage can be appreciated that when the cap 35 is removed during maintenance, inspection or replacement of the filter element 31 within the oil filter 3, the engine oil can be collected within the cap 35 and will hardly leak to the outside.

According to the third embodiment, the oil filter 3 and the oil cooler 4 assume respective positions shown by the phantom lines B1 and B2 in Fig. 1. It is, however, to be noted that the oil filter 3 and the oil cooler 4 may be reversed in position relative to each other, i.e., with the oil filter 3 positioned above the oil cooler 4.

In a fourth embodiment shown in Fig. 7, the oil filter 3 is so arranged as to be oriented upwardly with the longitudinal axis C3 thereof lying vertically, but the oil cooler 4 remains as is the case with the first embodiment shown in Fig. 3, i.e., is so arranged as to be oriented horizontally with the longitudinal axis C4 thereof lying horizontally. Thus, it will readily be seen that in this fourth embodiment the respective longitudinal axes C3 and C4 lie perpendicular to each other. According to this fourth embodiment, the oil filter 3 assumes such a position as shown by the phantom line C in Fig. 1.

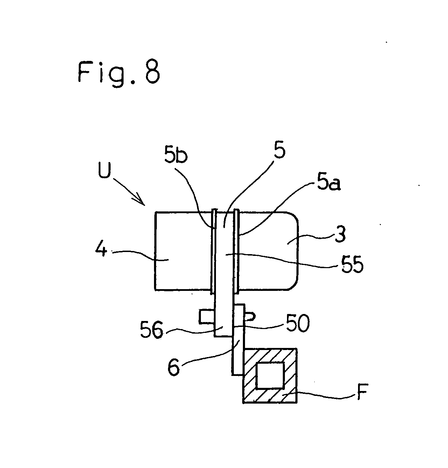

Referring to Fig. 8 showing a fifth embodiment of the present invention, the mounting bracket 5 is so designed as to be mounted on a motorcycle frame structure F through a gusset 6, not on the engine body 1, so that the oil filter 3 and the oil cooler 4 can assume respective positions on both sides of the mounting bracket 5.

According to the fifth embodiment shown in and described with reference to Fig. 8, where no space for installation is available in, for example, a front face of the engine body 1 shown in Fig. 2 and/or where interference with peripheral component parts such as, for example, cooling tubes and wires is desired to be avoided during mounting, the mounting bracket 5 shown in Fig. 8 can be secured to a portion of the motorcycle frame structure F forwardly of the engine body 1. By so doing, the combined oil filter and oil cooler unit U can be arranged at a proper position.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

## Claims

1. A combined oil filter and oil cooler unit, which comprises:
a mounting bracket adapted to be mounted on a vehicle engine or a vehicle body structure carrying the vehicle engine and having a filter support and a cooler support defined therein;
an oil filter supported by the filter support of the mounting bracket; and
an oil cooler supported by the cooler support of the mounting bracket.

2. The combined oil filter and oil cooler unit as claimed in Claim 1, wherein the bracket has an oil communicating passage defined therein for communicating between the oil filter and the oil cooler.

3. The combined oil filter and oil cooler unit as claimed in Claim 2, wherein the oil filter and the oil cooler are arranged on respective opposite sides of the mounting bracket.

4. The combined oil filter and oil cooler unit as claimed in Claim 3, wherein the filter support and the cooler support have a filter support face and a cooler support face, which are parallel to each other, wherein the oil filter and the oil cooler supported respectively by the filter support face and the cooler support face.

5. The combined oil filter and oil cooler unit as claimed in Claim 4, wherein the oil filter and the oil cooler have respective longitudinal axes substantially aligned with each other, and the coil communicating passage is arranged substantially coaxially on the respective longitudinal axes of the oil filter and the oil cooler.

6. The combined oil filter and oil cooler unit as claimed in Claim 1, wherein the oil filter and the oil cooler have respective longitudinal axes lying substantially parallel to each other and wherein the mounting bracket has a mounting face through which the mounting bracket is secured to the engine or the vehicle body structure, said mounting face being located at a position offset from the respective longitudinal axes of the oil filter and the oil cooler.

7. The combined oil filter and oil cooler unit as claimed in Claim 6, wherein the respective longitudinal axes of the oil filter and the oil cooler extend horizontally.

8. The combined oil filter and oil cooler unit as claimed in Claim 6, wherein the respective longitudinal axes of the oil filter and the oil cooler extend vertically with the oil cooler positioned above the oil filter.

9. The combined oil filter and oil cooler unit as claimed in Claim 1, wherein the oil cooler has a longitudinal axis extending horizontally and the oil filter has a longitudinal axis extending inclined downwardly relative to the oil cooler.

10. The combined oil filter and oil cooler unit as claimed in Claim 1, wherein the oil filter and the oil cooler have respective longitudinal axes lying perpendicular to each other.
